(19) Europäisches Patentamt
European Patent Office
Office européen des brevets

(11) Publication number: **0 072 038**
**A2**

# (12) EUROPEAN PATENT APPLICATION

(21) Application number: **82107340.0**

(22) Date of filing: **12.08.82**

(51) Int. Cl.³: **H 01 M 8/08**, H 01 M 8/04

(30) Priority: **12.08.81 JP 127192/81**

(43) Date of publication of application: **16.02.83**
**Bulletin 83/7**

(84) Designated Contracting States: **CH DE FR GB IT LI NL SE**

(71) Applicant: **Hitachi, Ltd., 5-1, Marunouchi 1-chome, Chiyoda-ku Tokyo 100 (JP)**

(72) Inventor: **Tsukui, Tsutomu, 146-25, Ishinazaka-cho, Hitachi-shi Ibaraki-ken (JP)**
Inventor: **Shimizu, Toshio, 3473-3, Higashiishikawa, Katsuta-shi Ibaraki-ken (JP)**
Inventor: **Doi, Ryouta, 308-2, Minamigo Nukata, Naka-machi Naka-gun Ibaraki-ken (JP)**

(74) Representative: **Strehl, Peter et al, Strehl, Schübel-Hopf, Schulz Patentanwälte Widenmayerstrasse 17, D-8000 München 22 (DE)**

(54) **Fuel cell.**

(57) A fuel cell includes a cell unit (10) divided by an anode (2) and a cathode (1) into a fuel chamber (15), an electrolyte chamber (13), and an air chamber (14). As the fuel, a mixture of an alcohol and water is used, which has been mixed at a predetermined ratio and stored in a fuel tank (16) from which is is supplied to the anode chamber (15) through a conduit (18) which may contain a valve (17) controlled in accordance with the anode current. Moisture from the air chamber (14) may be extracted by means of a trap (4) and stored in a water tank (19) from which it is taken out and mixed with the alcohol stored in an alcohol tank (20).

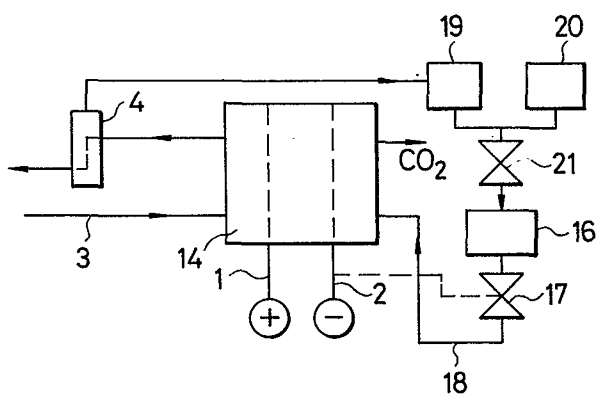


EP 0 072 038 A2

# FUEL CELL

This invention relates to a fuel cell, and particularly, to a small, compact fuel cell of an acid electrolyte type utilizing alcohol as a fuel.

One type of a fuel cell utilizing an acid electrolyte is described, for example, in the paper "The Methanol-Air Fuel Cell Battery" written by George Ciprios, published by the Intersociety Energy Conversion Engineering Conference in 1966. The described fuel cell has a large capacity exceeding 60 watts and a complicated construction requiring control of circulating systems for fuel, electrolyte, and water.

It is an object of this invention to provide a small fuel cell having a simple construction.

Another object of this invention is to provide a fuel cell having high efficiency for generating electricity.

According to this invention, in a fuel cell having an anode (fuel side pole or electrode) and a cathode (air side pole or electrode), fuel supplying means are provided for supplying a mixture of an alcohol and water at a predetermined ratio to the anode.

The invention will be further understood from the following detailed description and accompanying drawings wherein:

Figure 1 is a schematic view showing a basic construction of a fuel cell; and

Figures 2 and 3 are schematic views showing different embodiments of the fuel cell of this invention.

At first, basic reactions occurringat the electrodes of a fuel cell are explained.

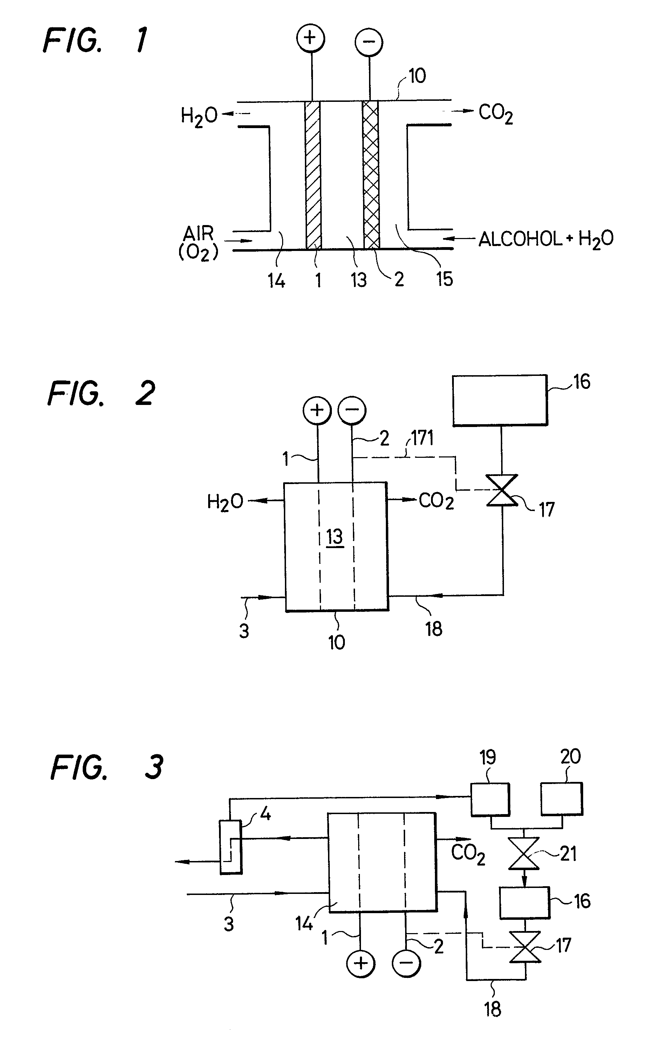

Figure 1 shows, schematically, one example of the basic construction of a fuel cell of an acid electrolyte type using alcohol as a fuel. In the Figure, 1 denotes the cathode, 2 denotes the anode, 13 denotes the acid electrolyte, 14 denotes the air chamber, and 15 denotes the fuel chamber defined within the unit cell 10. Fuel is supplied to the fuel chamber 15 and ambient air is blown into the air chamber 14. Under the existence of the electrolyte 13, such as sulfuric acid and a conventional catalyst (not shown, such as platinum), electricity is generated according to the supply of the fuel and air, or more specifically, $O_2$, between the anode and the cathode.

If methanol is used as the fuel, the following reaction (1) occurs at the anode, while the following reaction (2) occurs at the cathode:

$$CH_3OH + H_2O \rightarrow CO_2 + 6H^+ + 6e \quad \text{----(1)}$$

$$3/2O_2 + 6H^+ + 6e \rightarrow 3H_2O \quad \text{-----(2)}$$

On the other hand, if ethanol is used as the fuel, the following reaction (3) occurs at the anode, while the following reaction (4) occurs at the cathode:

$$C_2H_5OH + 3H_2O \rightarrow 2CO_2 + 12H^+ + 12e \quad \text{-----(3)}$$

$$3O_2 + 12H^+ + 12e \rightarrow 6H_2O \quad \text{------(4)}$$

As indicated in reaction (1), 1 mol. of water is required for 1 mol. of methanol to react at the anode when the fuel is methanol; whereas, as indicated in reaction (3), 3 mols. of water is required for 1 mol. of ethanol to react at the anode when the fuel is ethanol. In a large fuel cell device, it might be possible to circulate the fuel together with electrolyte through the fuel chamber via a conduit and to supply the necessary amount of water from outside to the circulating conduit in a

well adjusted manner. On the other hand, in a small fuel cell device which is useful as a portable power supply, it is necessary to omit a control system which requires a complicated construction and regulation. The fuel cell proposed by this invention utilizes a mixture of alcohol and water prepared beforehand at a predetermined ratio as the fuel. The mixture is supplied and consumed; i.e., reacted, at the anode without any complicated control means.

A preferred embodiment of this invention is now explained. Figure 2 shows, schematically, the major part of one embodiment. In the Figure, 10 represents a unit cell, as a whole, which has the cathode 1 and the anode 2. A fuel tank 16 is provided in which a mixture of alcohol, such as methanol and water mixed at a predetermined set or constant ratio, for example, 1 mol. of alcohol and 1 mol. of water is contained therein. From the fuel tank 16 to the anode 2 of the fuel cell, a path 18 is provided for supplying the mixture contained in the fuel tank 16, e.g., by gravity or capillary action, to the fuel chamber defined by the cell walls and anode 2. The path 18 can be a conduit. If desired, a valve 17 can be provided in the path 18 to control the amount of the alcohol/water mixture supplied to react at the anode 2. By adjusting the valve 17, the mixture of alcohol and water can be supplied to the anode 2 constantly over a period of time, which is a preferable manner for supplying the mixture when the load of the fuel cell is constant. To the contrary, if the load is changeable, an appropriate means for adjusting the flow rate of the mixture according to a change in the load; i.e., current, as indicated by the dotted line 171 in Figure 2 can be used. For example, an information as to the change

in the load is sensed at the anode and transmitted to the valve 17, then, the operation of the valve is performed to adjust the change so that the necessary amount of alcohol and water is always supplied to the anode. It will be appreciated that air is also being supplied via a blower to the air chamber defined by the cathode 1 and the walls of the cell to react at cathode 1. The flow rate of air is predetermined by the fuel being utilized.

Thus, a fuel cell having high efficiency of fuel and simple construction is accomplished. Since the mixture of alcohol and water is beforehand prepared at a predetermined constant ratio in the fuel tank, control of the relative amounts of the fuel components during the operation of the fuel cell is not necessary, and the physical size of the fuel cell can be reduced.

A small and portable fuel cell is realized in such a manner that the fuel tank is constructed to be an exchangeable container, such as cartridge, a cassette, or like device, in which the mixture of alcohol and water mixed at a predetermined set or constant ratio is contained.

Figure 3 shows the major part of another embodiment of the invention in which the same reference numerals are used for the same elements as shown in Figure 2. This embodiment differs from the embodiment shown in Figure 2 by providing a trap means 4 for trapping moisture coming out from the air chamber 14; a tank 19 is provided to retain water trapped by the trap means 4; an alcohol fuel tank 20 is provided; and water from the tank 19 and alcohol from the alcohol fuel tank 20 are mixed in the fuel tank 16 at a 1 : 1 ratio by adjusting a valve 21.

The trap means can be constructed, for example, such that a heat exchanger is provided by the fuel cell and outlet humid air, as well

as inlet ambient air,are conducted through the heat exchanger where outlet humid air is cooled by inlet ambient air to produce water from moisture. The produced water can be carried to the tank 19 through a conduit.

To supply alcohol and water to the fuel tank 16 in this embodiment, the following methods are, for example, usable; the tank 19 and the alcohol fuel tank 20 are so constructed that these tanks have predetermined capacities, respectively, to give a predetermined ratio between the alcohol and water, and when the tanks are filled up with the respective liquid, the contents are supplied, in toto, to the fuel tank 16 through the valve 21 to be mixed; or trapped water is supplied to another tank (not shown) and alcohol and water are mixed therewith while being monitored by a hydrometer (not shown), and when a predetermined ratio is attained, the mixture is supplied to the fuel tank 16. Incidentally, the hydrometer used here is sufficient to be a small and simple one, because the specific gravity of the mixture of alcohol and water varies depending largely on the mixture ratio. This embodiment is preferably applied to a relatively larger fuel cell than that described in Figure 2 from the viewpoint that the trapping means for trapping moisture is required. Moreover, it should be noted that it is, again, not necessary in this embodiment to provide means for continuously controlling the relative amounts of the fuel components during the operation of the fuel cell.

In the above-described embodiments, the mixture ratio of alcohol and water is adjusted at the 1 : 1 ratio, which should be noted to be the least ratio. That is, the amount of water can be increased in actual use. This is because, on the one hand, water tends to ooze out from the

fuel chamber to the air chamber, and on the other hand, alcohol tends more to diffuse to the cathode so that direct oxidation thereof occurs at the cathode and the cell voltage decreases, if the amount of water is further decreased. Practically, 1 to 5 mols. of water are mixed with 1 mol. of methanol, while 3 to 15 mols. of water are mixed with 1 mol. of ethanol.

It should be noted that an actual fuel cell device comprises a plurality of unit cells stacked together and electrically connected in series. In such a construction, the fuel tank can be constructed as a common fuel supply to all the unit cells.

WHAT IS CLAIMED IS:

1. A fuel cell comprising:

an anode (2),

a cathode (1),

a first means (15) for contacting said anode (2) with a mixture of alcohol and water at a predetermined constant ratio of alcohol to water, said first means including a fuel storage container means (16) for storing a charge of said mixture that has been mixed beforehand at said predetermined constant ratio, and

second means (14) for contacting said cathode (1) with an oxygen-containing gas.

2. The fuel cell of claim 1, wherein said first means include a fuel tank (16) that provides the fuel storage container means for storing said mixture, and a fluid path (18) leading from said tank to said anode (2).

3. The fuel cell of claim 3, wherein fluid path (18) is a capillary for supplying said mixture to said anode (2) at a constant rate.

4. The fuel cell of claim 2 or 3, wherein said first means further include means (17) for controlling the quantity of said mixture supplied to said anode (2) from said fuel storage container (16) via said fluid path (18).

5. The fuel cell of claim 4, further comprising means (171) for adjusting said controlling means (17) in accordance with the load of the fuel cell, preferably the anode current.

6. The fuel cell of any of claims 1 to 3, further comprising a unit cell (1o) containing the anode (2) and the cathode (1), wherein said storage container means include a fuel tank (16) having a construction that can be attached with the unit (1o) in an exchangeable manner.

7. The fuel cell of any of claims 1 to 6, wherein said oxygen-containing gas is air, and further comprising third means (4, 19) for trapping moisture contained in the air after contacting said cathode (1) and for supplying the trapped water to said first means for preparation of said mixture.

8. The fuel cell of any of claims 1 to 7, wherein said mixture comprises 1 mol. of methanol and from 1 mol. to 5 mols. of water.

9. The fuel cell of any of claims 1 to 8, wherein said fuel cell comprises at least one unit cell (1o) containing an anode (2) and a cathode (1), said unit cell (1o) being divided by the anode (2) and the cathode (1) into a fuel chamber (15), an electrolyte chamber (3) and an air chamber (14).

1o. The fuel cell of any of claims 1 to 8, wherein said fuel cell (1o) includes a chamber (13) containing electrolyte which contacts the anode (2) and the cathode (1).

FIG. 1

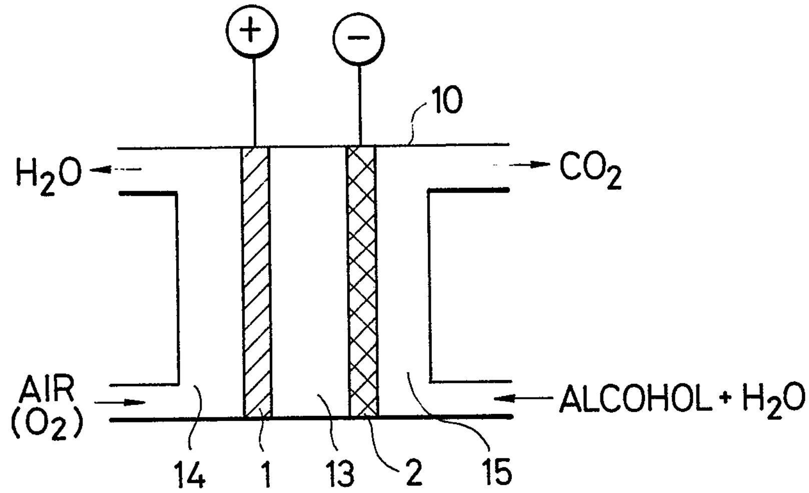


FIG. 2

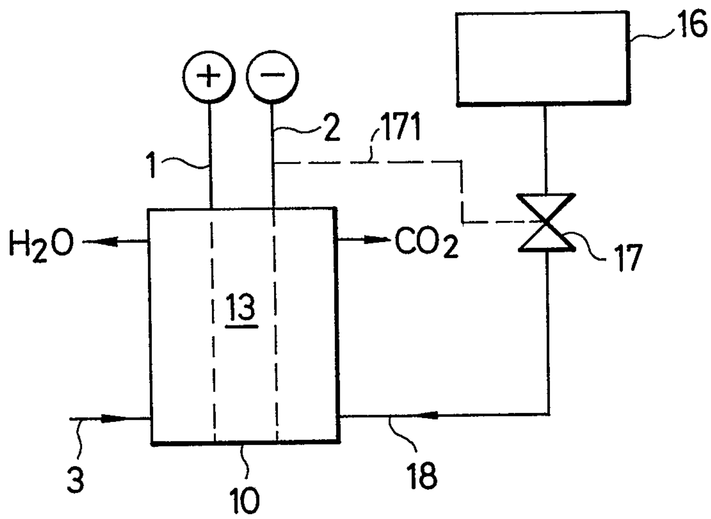


FIG. 3